Europäisches Patentamt

European Patent Office

Office européen des brevets

(11) Veröffentlichungsnummer: **0 504 691 A2**

# EUROPÄISCHE PATENTANMELDUNG

(21) Anmeldenummer: **92103945.9**

(22) Anmeldetag: **07.03.92**

(51) Int. Cl.5: **B23Q 3/12**

(30) Priorität: **16.03.91 DE 9103229 U**

(43) Veröffentlichungstag der Anmeldung:
**23.09.92 Patentblatt 92/39**

(84) Benannte Vertragsstaaten:
**DE FR GB IT SE**

(71) Anmelder: **Mauser-Werke Oberndorf GmbH**
**Teckstrasse 11**
**W-7238 Oberndorf(DE)**

(72) Erfinder: **Mayer, Manfred**
**Schönblick 17**
**W-7230 Schramberg(DE)**
Erfinder: **Ross, Günther**
**Am Kirschberg 4**
**W-3341 Klein Denkte/Wolfenbüttel(DE)**

(74) Vertreter: **Hofmann, Gerhard, Dipl.-Ing.**
**Patentassessor et al**
**Stephanstrasse 49**
**W-8500 Nürnberg 30(DE)**

(54) **Mess- und Verarbeitungsstation für grosse Werkstücke.**

(57) Die Erfindung zeichnet sich durch das wechselseitige Messen bzw. Bearbeiten von Konturen bzw. Geometrien an großen Werkstücken aus. In einer Koordinatenmeßmaschine werden zusätzlich zu den Meßköpfen auch Gelenkfräsköpfe eingesetzt. Dazu wird der Fräskopf besonders mit einer passenden Aufnahmeeinrichtung in die Kupplung der Pinole ausgestattet und ist weiterhin so gestaltet, daß er für sich gesehen eine Drehbewegung von 325° um seine senkrechte Achse und eine Schwenkbewegung von jeweils 110° ausführen kann.

FIG. 1

Die Erfindung betrifft eine Meß- und Bearbeitungsstation für große Werkstücke gemäß dem Oberbegriff des Anspruchs 1.

Durch das EP 0 234 548 A2 ist eine Bearbeitungsstation für große Werkstücke bekannt geworden. Diese Station weist eine Bearbeitungseinheit auf, die längs dreier senkrecht zueinander stehenden Achsen positionierbar ist, um so in jedem Punkt ihres Arbeitsbereiches Bearbeitungsfunktionen ausführen zu können. Ein Ständer ist hierzu in der Regel senkrecht angeordnet und mit horizontal verlaufenden Spindelantrieben für einen Schlitten versehen, der seinerseits wiederum mit Spindelantrieben ausgerüstet ist und senkrecht zum Boden verschiebbar ist. Dieser Schlitten nimmt an einem weiteren Support die Bearbeitungseinheit auf, die ihrerseits senkrecht zur Ebene des Ständers verschiebbar ist und darüber hinaus noch verschwenk- und drehbar vorgesehen sein kann.

Die Bearbeitungseinheit wird vorzugsweise mit einem Laser bestückt, jedoch wird nicht dargestellt, wie die 4. und 5. Achse aufgebaut ist, um das Drehen und das Kippen bzw. das Schwenken des Lasers zu steuern.

In der Meßtechnik, insbesondere für die Vermessung großer Werkstücke, werden eine Reihe von Koordinatenmeßgeräten angeboten. Hierzu hat sich eine Form, die als Portalbauweise bezeichnet wird, besonders bewährt. Dort werden die zwei waagerechten Bewegungsebenen in X- und Y-Richtung durch die Führung des Gesamtgerätes auf Schienen und die Bewegung einer Pinole quer zum Portal realisiert.

In Z-Richtung wird die Bewegung durch das senkrechte Ausfahren der Pinole vorgenommen. An dieser Pinole können jetzt verschiedene Meßköpfe angebracht werden.

Diese Meßköpfe werden in Verbindung mit dem Gesamtgerät über einen Steuerrechner betätigt, wobei dieser Steuerrechner gleichzeitig die aufgenommenen Meßpunkte verarbeitet. Das bedeutet unter anderem, daß auf einer verfügbaren Einheit des Rechners, z. B. Speicher, Floppy disk, Festplatte oder externe Einheit, eine Positionsfolge der Maschinenachsen, d. h. der Maschinenachsen, die von den Koordinaten X, Y und Z ausgedrückt werden, abgespeichert werden. Für bei komplexen Messungen eingesetzte Meßköpfe, welche noch zusätzlich schwenk- und drehbar sind, werden auch die Koordinaten der Zusatzachsen, also insgesamt von fünf Achsen, abgespeichert.

Die aufgenommenen Daten bilden ein Programm, das bei direkter Ausführung von der numerischen Steuerung die Bahn wiedergibt, die beim Speichern zurückgelegt wurde, ohne daß weitere Verarbeitungen notwendig sind. Um dieses sogenannte "Digitalisieren" durchzuführen, existieren verschiedene Programme, die die verschiedensten Meßmöglichkeiten unterstützen. Von den Programmen wird ebenfalls die Bedienung der Meßgeräte unterstützt.

Das prozeßnahe Erfassen der Werkstücksgeometrie und der gleichzeitigen Toleranzüberwachung und der Rückfluß der Meßergebnisse in die Produktion sind ebenfalls ständige Aufgaben für die CNC-Koordinatenmeßgeräte. Ihr Aufstellungsort soll dabei oft direkt im Fertigungsbereich, z. B. neben NC-Maschinen, liegen.

Durch den fertigungsnahen Einsatz müssen bestimmte Anforderungen erfüllt werden, die sich einmal aus den Umgebungsbedingungen ergeben und sich zum anderen nach dem gewünschten Automatisierungsgrad richten. Ferner ist die Bedienung unter Werkstattbedingungen von Bedeutung.

Hier ist, abgesehen von Schwingungen und anderen Problemen, insbesondere der Ölnebel oder bei spanender Bearbeitung von Kunststoffen, der dort auftretende Staub gefährlich für die Meßgeräte.

Um diesen Einflüssen entgegenzuwirken, wird in den Geräten, d. h. auch in den Verbindungsstellen Pinole zum Meßkopf durch entsprechende Maßnahmen ein Überdruck erzeugt. Dieser Überdruck wird mit gefilterter Luft erzeugt. Durch ihn werden insbesondere Schäden an den Getrieben und hochfeinen Lagern durch die Staubeinwirkung weitgehend vermieden.

Wie schon erwähnt, enthalten solche Koordinatenmeßgeräte Taster-Wechsel-Einrichtungen, wodurch deren Effizienz beträchtlich erhöht wird. Sie können für folgende Aufgaben eingesetzt werden: Messen unterschiedlicher Werkstücke in gemeinsamer Aufspannung ohne Unterbrechung; Messen komplizierter Werkstücke und ähnliches.

Für eine Taster-Wechsel-Einrichtung spricht auch, daß dadurch das Koordinaten-Meßgerät für das programmierte Teilspektrum in ständiger Meßbereitschaft ist.

Da solche Geräte, d. h. sowohl die Bearbeitungs- als auch die Meßgeräte, in ihrer Herstellung sehr kostenaufwendig sind, entstehen dem Betreiber, will er Messen und Bearbeiten, sehr hohe Kosten.

Der im Anspruch 1 angegebenen Erfindung liegt das Problem zugrunde, eine Meß- und Bearbeitungsstation zu schaffen, mit der einmal gemessene Konturen auch in der Bearbeitung durch das gleiche Gerät in einem Werkstück erzeugt werden können.

Dieses Problem wird mit den Maßnahmen des Anspruches 1 gelöst.

Mit der Erfindung wird im angegebenen Anwendungsfall erreicht, daß nicht nur das Messen großer Werkstücke durchgeführt wird, sondern auch das Digitalisieren von Formen und anderen Geometrien und zusätzlich auch ein 5-achsiges Fräsen dieser Formen und anderer Geometrien vorgenommen werden kann.

Vorteilhafte Ausgestaltungen der Erfindung sind in den Unteransprüchen angegeben.

Die Erfindung soll anhand eines Ausführungsbeispiels näher erläutert werden.

In der zugehörigen Zeichnung zeigen:

Figur 1    eine Gesamtansicht der Meß- und Bearbeitungsstation,

Figur 2    die Vorderansicht eines Gelenkfräskopfes,

Figur 3    die Seitenansicht eines Gelenkfräskopfes,

Figur 4    die ausführliches Darstellung des Gelenkfräskopfes nach Figur 2,

Figur 5    einen Schnitt B-B nach Figur 4,

Figur 6    die Pinolenverlängerung zur Kopplung der Tast- und Fräsköpfe und

Figur 7    einen Ausschnitt nach Figur 6 zur Darstellung des Arretierhebels.

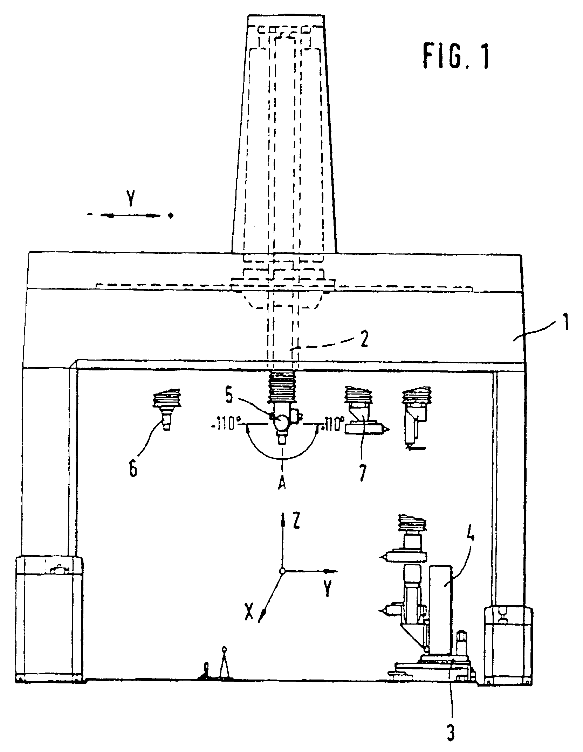

Die in Figur 1 dargestellte Gesamtansicht einer Meß- und Bearbeitungsstation für insbesondere große Werkstücke bezieht sich auf eine Meßmaschine in Portalbauweise, mit welcher Werkstücke auch bearbeitet, d. h. Formen bzw. bestimmte Geometrien gefräst werden können. In dem Portal 1, welches insgesamt in die Zeichenebene bewegt werden kann, befindet sich eine Pinole 2 mit einer nicht dargestellten Führung und Steuerung. Diese Pinole 2 wird insgesamt in Y-Richtung bewegt, während ihre senkrechte Bewegung die Z-Richtung beinhaltet.

Mittels eines Wechselwagens 3, welcher eine Hubeinrichtung 4 aufweist, auf welcher Ablagemöglichkeiten für verschiedene Köpfe vorgesehen sind, werden die einzelnen Köpfe so weit hochgefahren, daß sie in die Pinole 2 einrasten, bzw. aus dieser ausrasten können.

In der Figur 1 sind drei verschiedene Köpfe angedeutet. Die Pinole 2 hat einen Gelenkfräskopf 5 aufgenommen. Rechts daneben ist ein Meßkopf 6 angedeutet und links ein Digitalisierkopf 7. Der Digitalisierkopf 7 wird in zwei Stellungen gezeigt, wobei die eine Stellung zur Aufnahme in den Wechselwagen 3 dient.

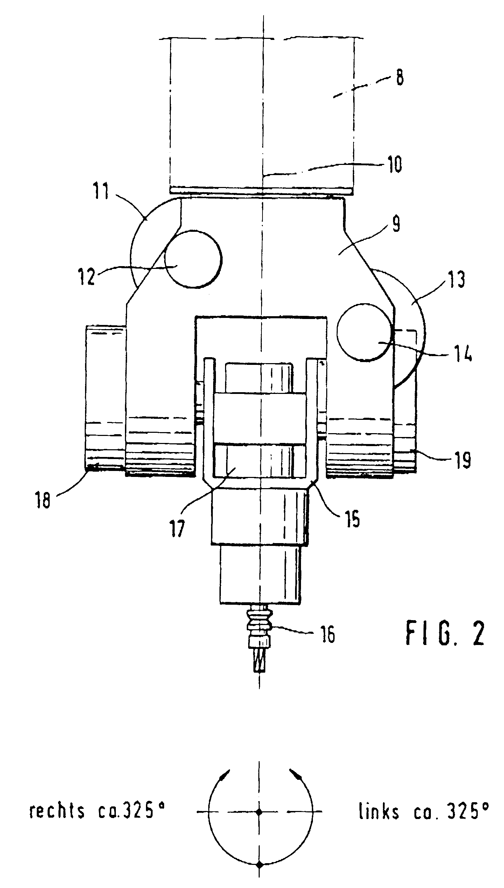

Figur 2 zeigt eine Grobdarstellung des Gelenkfräskopfes in der Vorderansicht.

Über einen Topf 8, welcher unter anderem die Kupplungen und Drehgeber enthält, kann der Gelenkfräskopf 5 mit der Pinole 2 verbunden werden. Unter dem Topf 8 ist eine äußere Gabel 9 angeordnet. Diese Gabel 9 kann eine Drehbewegung zu der Längsachse 10 des Fräskopfes 5 von 325° nach rechts bzw. nach links ausführen. Um diese Drehbewegung auszuführen, ist ein erster Motor 11 vorgesehen, der eine Spindel 12 antreibt. Ein zweiter Motor 13 bewegt über seine Spindel 14 eine zweite Gabel 15. Die Gabel 15 nimmt die Frässpindel 16 und den Fräsmotor 17 auf.

Zwei Deckel 18, 19 auf der äußeren Gabel 9 decken die Lager und die Getriebe für die Schwenkbewegung ab.

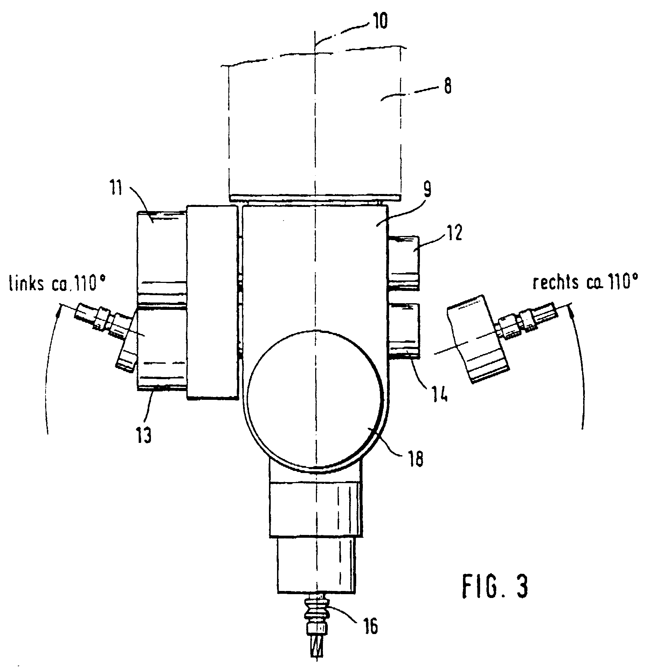

Mit Figur 3, welche die Seitenansicht des Gelenkfräskopfes 5 in Grobdarstellung widergibt, soll die Schwenkbewegung der Frässpindel 16 um jeweils 110° augenscheinlich dargestellt werden. Die Frässpindel 16 wird dazu einmal in ihrer rechten und einmal in ihrer linken Endlage gezeigt.

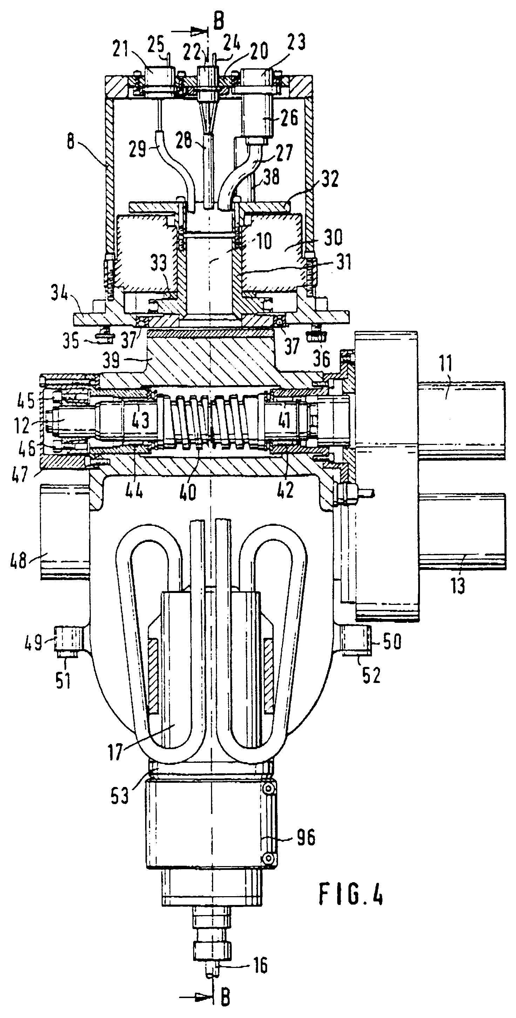

In Figur 4 wird eine detaillierte Darstellung des Gelenkfräskopfes nach Figur 3 vorgenommen.

Der Topf 8 wird durch einen drehbar gelagerten Aufnahmeteller 20 abgeschlossen. An diesem Aufnahmeteller sind verschiedene Steckereinsätze 21, 22 mit Kontaktstiften 25, 26 und Kupplungen 23 mit Ventilgehäusen 24 angebracht. Die Steckergehäuse 21, 22 beinhalten Vielfachstecker zur Stromzufuhr für die Motoren 11, 13 und 17 und zur Verbindung der Steuerleitung. Die Kupplungen 23, wovon nur eine dargestellt ist, dienen zur Verbindung mit der Kühlwasserzuführung für den hochtourig laufenden Fräsmotor 17. Vom Ventilgehäuse 24 geht die Kühlwasserleitung 27 zum Fräsmotor 17, um den sie bogenförmig gelegt ist. Der Kühlwasseraustritt ist nicht weiter dargestellt, er wird aber über eine gleiche Kupplung realisiert.

Ebenso sind die Strom- bzw. Steuerleitungszuführung 28, 29 nur angedeutet und aus Übersichtlichkeitsgründen die einzelnen Anschlüsse innerhalb des Fräskopfes 5 nicht gezeichnet.

In dem Topf 8 ist ein inkrementaler Drehgeber 30 befestigt. Dieser Drehgeber 30 enthält eine Drehachse, die hier nicht dargestellt ist. In dieser Drehachse ist eine Hohlachse 31 angeordnet, welche durch einen oberen Spannteller 32 abgeschlossen ist. Dieser Spannteller 32 bildet mit der Hohlachse 31 eine Einheit. Der Drehgeber 30 ist auf einer Justierscheibe 33 gelagert, während er außen an dem Flansch 34 befestigt ist. Dieser Flansch 34 weist vier Befestigungsschrauben 35, 36 auf, mit ihnen wird der Fräskopf 5 an die Pinole 2 geschraubt. Im Innenraum wird der Flansch 34 durch ein Kugellager 37 abgeschlossen, dessen Innenseite mit der Hohlachse 31 verbunden ist. Die Hohlachse 31 ist jetzt auf dem Gehäuse 39 fest angeordnet. Der obere Teil des Gehäuses 39 wird in der Figur 4 im Schnitt dargestellt, so daß man die Anordnung des Motors 11 mit seiner Spindel 12 erkennen kann.

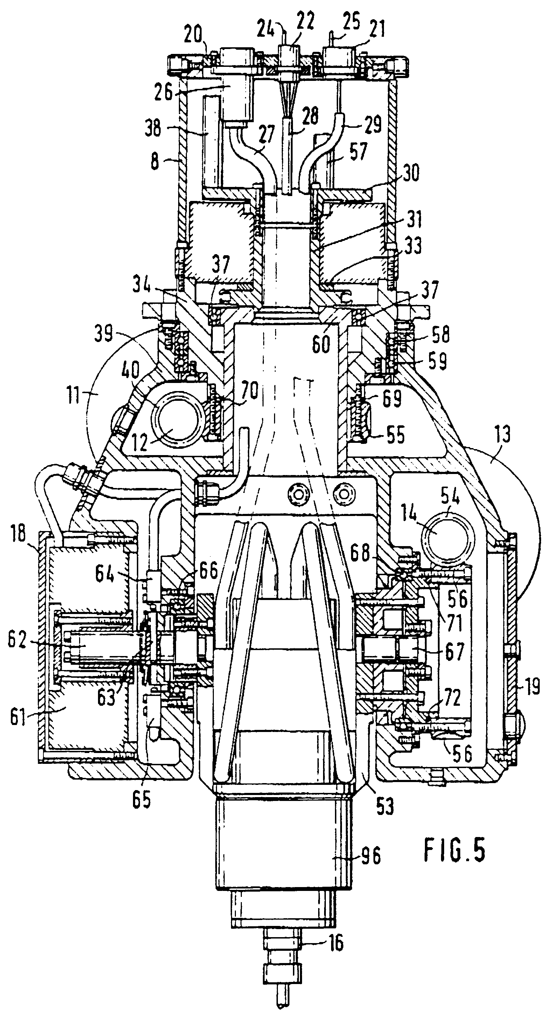

Auf der Spindel 12 ist mittig ein spieleinstellbares Schneckengetriebe 40 angeordnet. Die Spindel 12 ist in Radial- und Axialnadellagern 41, 42, 43, 44 gelagert, wobei die Spieleinstellung durch Abstimmung einer Justierscheibe 45, 46 erfolgt. Abgeschlossen wird die Spindel 12 auf der dem Motor 11 gegenüberliegenden Seite durch einen Deckel 47. Unterhalb des Motors 11 für die Drehbewegung ist der Motor 13 für die Schwenkbewegung befestigt, dessen Spindel 14 in dieser Figur 4 nicht dargestellt ist. Die Drehbewegung erfolgt nun dermaßen, daß bei Ansteuerung des Motors 11, dessen Spindel 12 über eine Schnecke (s. Figur 5) das gesamte Gehäuse 39 mitsamt den Motoren 11, 12 dreht.

Die Spindel 14 für die Schwenkbewegung ist ebenfalls auf der Gegenseite zum Motor 13 durch einen Deckel 48 abgeschlossen. Am unteren Teil des Gehäuses 39 sind noch zwei gegenüberliegende Leisten 49, 50 angebracht. Diese Leisten 49, 50 mit Zentrierbuchsen und Auflagebolzen 51, 52 dienen zur Aufnahme im Wechselwagen.

Weiterhin erkennt man den Fräsmotor 17, der von der Kühlwasserleitung 27 umgeben ist. Der Fräsmotor 17 ist in der inneren Gabel 15, von welcher hier eine Spindelaufnahme 53 zu sehen ist, aufgenommen. Der Spindelaufnahme 53, schließt sich eine Klemmbuchse 96 an, mit der der Fräsmotor 17 geklemmt und dann an die Spindelaufnahme geschraubt wird.

Zu beachten ist noch, daß hier der Deckel 18 nicht gezeichnet ist, damit man den Verlauf der Kühlwasserleitung 27 erkennen kann.

Der Schnitt B-B in der Figur 5 verdeutlicht insbesondere die Arbeit der Spindeln 12, 14 und den dazugehörigen Schnecken 40, 54 sowie Schneckenrädern 55, 56.

Der Spannteller 32 ist über Bolzen 38, 57 mit dem Aufnahmeteller 20 verbunden. Zwischen dem Flansch 34 und dem Gehäuse 39 sind zwei weitere Kugellager 58, 59 angeordnet, so daß der Topf 8 sowie der Flansch 34 fest in die Kupplung zur Pinole eingefügt werden kann. Der Aufnahmeteller 20, der Spannteller 32 zusammen mit der Hohlachse 31, welche auch als Hülse betrachtet werden kann, bilden mit einer Buchse 60 eine Einheit, die sich innerhalb des Topfes 8 drehen kann.

Das Schneckenrad 55 ist mit dem Flansch 34 verschraubt, in welches die Schnecke 40 der Spindel 12 eingreift. Da der Flansch 34 it der Pinole 2 verbunden ist, dreht sich der gesamte Fräskopf 5, wenn der Motor 11 betätigt wird. Zu beachten ist, daß der Spannteller 32 sowie alle mit ihm verbundenen Teile 31, 60 hohl ausgelegt sind. Damit können die Kühlwasserleitungen 27 und die Leitungen 28, 29 durch sie hindurch zu den Verbrauchern geführt werden. Für die Drehbewegung, welche 325° beträgt, sind die notwendigen Endschalter aus Übersichtsgründen nicht dargestellt.

Im unteren Teil des Gehäuses 39 ist ein weiterer inkrementaler Drehgeber 61 angeordnet, der die Schwenkbewegung in speicherbare Impulse umsetzt. In diesem Drehgeber 61 ist eine Schwenkachse 62 angeordnet. Durch die Schwenkachse 62 ist ein Bolzen 63 geführt, welcher Endschalter 64, 65 in der jeweiligen Schwenkendlage betätigt. Diese Endschalter 64, 65 sind am inneren Gehäuse 39 befestigt.

Die Schwenkachse 62 wiederum ist mit einer Seite der U-förmigen Spindelaufnahme 53 verbunden.

Zwischen Gehäuse 39 und der Schwenkachse 62 auf der Drehgeberseite ist ein Kugellager 66 vorgesehen. Auf der anderen Seite der Spindelaufnahme 53 ist in gleicher Achsenlage eine zweite Schwenkachse 67 vorgesehen. Diese Schwenkachse 67 ist wiederum mit der Spindelaufnahme 53 verbunden und gegen das Gehäuse 39 mittels eines Kugellagers 68 gelagert. Gleichzeitig ist an dieser Schwenkachse 67 das Schneckenrad 56 aufgesetzt. Das Schneckenrad 56 greift in die Schnecke 54 der Spindel 14 ein, womit die Verbindung zur Umsetzung, der durch den Motor 13 gegebenen Schwenkbewegung, gewährleistet ist.

Das Schwenken erfolgt also in die Betrachtungsebene der Figur 5 hinein bzw. hinaus.

Die Schneckenräder 55, 56 werden jeweils über Justierringe 69 bis 72 zur Schneckenwelle justiert und mit Schrauben am Flansch 34 bzw. an der Schwenkachse 67 befestigt.

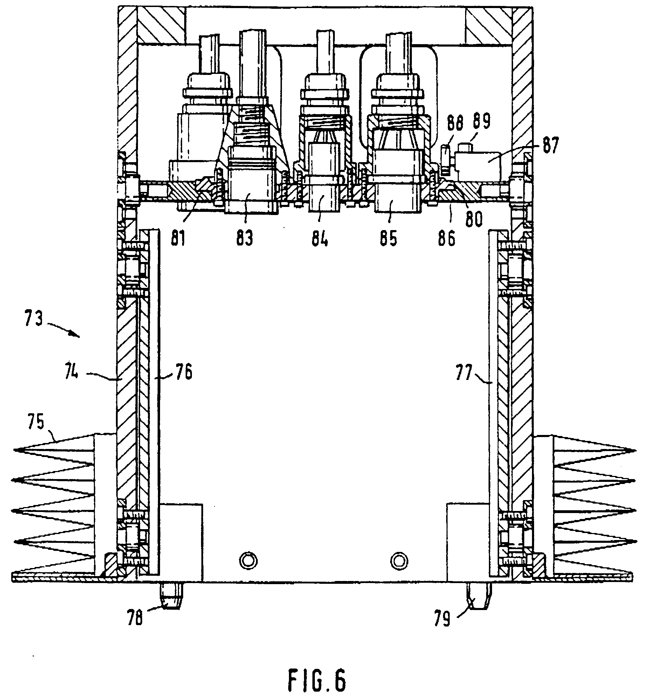

In Figur 6 wird die Pinolenverlängerung bzw. das Kupplungsstück zwischen Pinole und dem Fräskopf 5 bzw. den Tastköpfen 6, 7 gezeigt. Das Kupplungsstück, welches insgesamt mit dem Bezugszeichen 73 versehen ist, weist ein Gehäuse 74 mit einem Staubschutzbalg 75 auf. Die Innenseite des Gehäuses 74 weist Führungsschienen 76, 77 zur Fühdes Fräskopfes 5 bzw. der Tastköpfe 6, 7 auf.

Am unteren Ende des Kupplungsstückes 73 sind Zentrierbolzen 78, 79 für das jeweilige Gegenstück 5, 6, 7 vorgesehen.

Im oberen Teil des Kupplungsstückes 73 ist ein Drehteller 80, der über ein Gleitlager 81 auf einem Ring 86 liegt, welcher mit der Gehäusewand verbunden ist, angebracht. Dieser Drehteller nimmt die Gegenstücke 82, 83, 84, 85 für die Kühlwasserleitung und die Steckereinsätze auf, wobei hier auch die Gegenstücke für die Stecker der Tastköpfe 6, 7 vorgesehen sind. Nach oben ist das Kupplungsstück 73 offen gestaltet, so daß die Kühlwasserleitung und die anderen Leitungen, welche durch die Pinole 2 geführt werden, in dieser beim Drehen eine ausreichende Länge aufweisen.

Auf dem Ring 86 am inneren Gehäuserand 74, der den Drehteller 80 aufnimmt, sind gleichmäßig verteilt mehrere Gegenhalter 87 mit jeweils einem Kugellager 88, wovon nur eines dargestellt ist, angeordnet.

Diese Gegenhalter 87 dienen dazu, eine Gegenkraft für den hohen Wasserdruck, welcher in den Kühlwasserleitungen 27 auftritt, zu erzeugen. Die Kugellager 88 werden dazu durch eine Einstellschraube 89 genau auf den Drehteller 80 eingestellt.

Um ein sicheres Wechseln der Köpfe 5, 6, 7 zu erreichen, ist mindestens eine Arretiereinrichtung 90 mit einem an seiner Spitze konusförmigen Arretierhebel 91 vorgesehen.

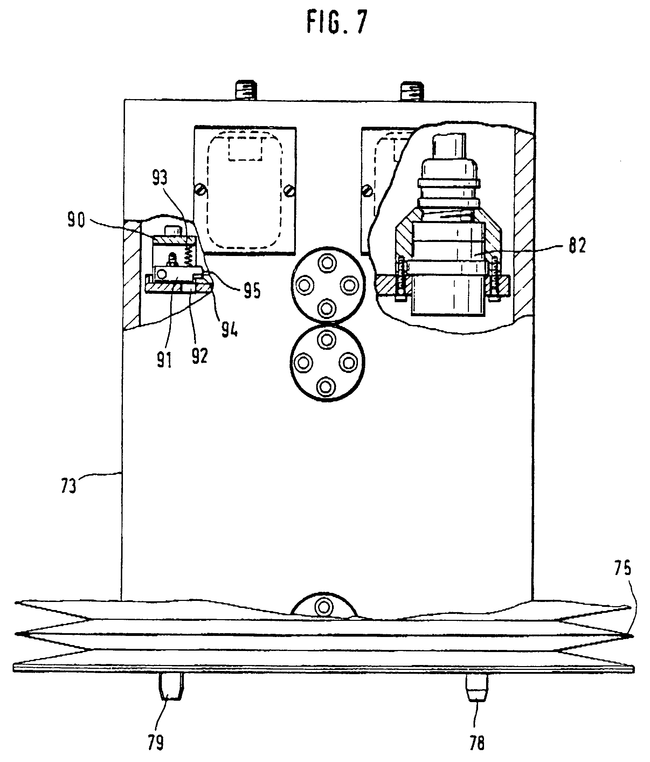

Eine mögliche Ausführungsform dazu ist in Figur 7 dargestellt.

Die Arretiervorrichtung 90 ist ebenfalls, wie die Gegenhalter 87 auf dem Ring 86 befestigt. Dieser Ring 86 weist für die Arretiervorrichtung eine Bohrung 92 auf. Durch diese Bohrung 92 wird ein Stift, welcher am Topf 8 der Köpfe 5, 6, 7 vorgesehen ist, geführt.

Trifft dieser Stift auf den Arretierhebel 91 wird dieser nach oben gehoben. Solange er in Ruhelage ist, wird der Arretierhebel 91 durch eine Feder 93 nach unten gedrückt. Ist nun ein Kopf 5, 6, 7 eingerastet, ist auch der Arretierhebel 91 aus dem Drehteller 80 ausgerastet. Der Drehteller 80 enthält entsprechend der Anzahl der Arretiervorrichtung 90 Nute 94, in welche die konusförmige Nase 95 des Arretierhebels 91 in Ruhelage zentrierend einrastet.

Letztlich ist in dieser Figur 7 nochmals das Gegenstück 82 für das Kühlwasserventil 24 herausgezeichnet.

**Patentansprüche**

1.  Meß- und Verarbeitungsstation für große Werkstücke in Portalbauweise, mit einer Pinole, welche mit auswechselbaren Tastköpfen bestückt werden kann, sowie einer Wechseleinrichtung, wobei die gesamte Maschine in Verbindung mit einer Mikroprozessorsteuerung arbeitet,
    dadurch gekennzeichnet,
    daß zu den Tastköpfen auch ein Werkzeug einsetzbar ist, mit dem ein mehrachsiges Bearbeiten eines Werkstückes ausführbar ist, so daß ein wechselseitiges Bearbeiten und Messen des Werkstückes erfolgen kann.

2.  Meß- und Verarbeitungsstation nach Anspruch 1,
    dadurch gekennzeichnet,
    daß ein Gelenkfräskopf für ein 5-achsiges Bearbeiten einsetzbar ist.

3.  Meß- und Verarbeitungsstation nach den Ansprüchen 1 und 2,
    dadurch gekennzeichnet,
    daß ein schnelles und einfaches Auswechseln der Köpfe über eine automatische Kopplung der Strom- und Kühlwasserleitung erfolgt.

4.  Meß- und Verarbeitungsstation nach den Ansprüchen 1 bis 3,
    dadurch gekennzeichnet,
    daß mit einem Wechselwagen, auf dem die Köpfe abgelegt sind, der einzuwechselnde Kopf lagerichtig in die Pinole elektromotorisch hineingefahren wird, wobei die Leitungen automatisch gekoppelt werden.

5.  Meß- und Verarbeitungsstation nach den Ansprüchen 1 und 2,
    dadurch gekennzeichnet,
    daß der Gelenkfräskopf einen Drehbereich von 325° und einen Schwenkbereich von 110° jeweils in beide Richtungen hat.

6.  Meß- und Verarbeitungsstation nach den Ansprüchen 1, 2 und 4,
    dadurch gekennzeichnet,
    daß sämtliche Leitungen innen durch den Fräskopf und durch die Pinole hindurchgeführt sind.

7.  Meß- und Verarbeitungsstation nach Anspruch 6,
    dadurch gekennzeichnet,
    daß die Leitungen, die eine Drehbewegung mit durchführen, auf einer Drehplatte montiert sind.

8.  Meß- und Verarbeitungsstation nach den Ansprüchen 6 und 7,
    dadurch gekennzeichnet,
    daß die Drehplatte arretierbar ist, damit beim Einwechseln und Auswechseln der Fräsköpfe Stecker und Dose lagerichtig aufeinander treffen.

9.  Meß- und Verarbeitungsstation nach den Ansprüchen 5 bis 8,
    dadurch gekennzeichnet,
    daß beim Ineinanderfahren von Stecker und Dose der Drehteller automatisch entriegelt wird, damit die Leitungen sich mitverdrehen können.

10. Meß- und Verarbeitungsstation nach den Ansprüchen 1 und 2,
    dadurch gekennzeichnet,
    daß der Gelenkfräskopf inkrementale Drehgeber aufweist, die in direkter und starrer Verbindung jeweils mit einer Dreh- bwz. Schwenkachse stehen.

11. Meß- und Verarbeitungsstation nach Anspruch 10,
    dadurch gekennzeichnet,
    daß die Dreh- und Schwenkachse über einstellbare Schneckengetriebe betätigt werden.

12. Meß- und Verarbeitungsstation nach Anspruch 11,
    dadurch gekennzeichnet

daß die Schneckengetriebe spielfrei und selbsthemmend aufgebaut sind.

FIG. 1

FIG. 2

rechts ca. 325°          links ca. 325°

links ca. 110°          rechts ca. 110°

FIG. 3

FIG.4

FIG.5

FIG.6

# FIG. 7